# EUROPEAN PATENT SPECIFICATION

(11) **EP 3 049 690 B1**
(45) Date of publication and mention of the grant of the patent: **10.10.2018**
(21) Application number: 15722534.3
(22) Date of filing: 13.05.2015
(51) Int. Cl.: F16F 9/54, B60G 13/00, B60G 15/06

(54) **DECOUPLER FOR AN ANTI-VIBRATION MOUNTING DEVICE AND ANTI-VIBRATION MOUNTING DEVICE COMPRISING SUCH A DECOUPLER**
ENTKUPPLER FÜR EIN ANTI-VIBRATION MONTAGEVORRICHTUNG UND ANTI-VIBRATIONS MONTAGEVORRICHTUNG MIT EINEM SOLCHEN ENTKUPPLER
DECOUPLEUR POUR DISPOSITIF DE MONTAGE ANTIVIBRATOIRE ET DISPOSITIF DE MONTAGE ANTIVIBRATOIRE COMPRENANT UN TEL DECOUPLEUR

(30) Priority: 13.05.2014 FR 1454245
(43) Date of publication of application: 03.08.2016
(73) Proprietor: Vibracoustic Nantes SAS, 44470 Carquefou (FR)
(72) Inventor: KIEFFER, Jérôme, F-44300 Nantes (FR)
(74) Representative: Flügel Preissner Schober Seidel
(86) International application number: PCT/EP2015/060704
(87) International publication number: WO 2015/173365

(56) References cited:
- EP-A1- 0 352 184
- EP-A1- 0 381 560
- EP-A1- 2 110 273
- EP-A1- 2 270 356
- WO-A1-2010/136091
- DE-A1- 4 326 197
- DE-A1- 19 649 247
- FR-A1- 2 319 813
- FR-A1- 2 546 111

## Description

### FIELD OF THE INVENTION

The invention concerns the field of anti-vibration devices, and more particularly the anti-vibration devices for vehicles, especially but not solely, upper suspension supports.

### PRIOR ART

The classic anti-vibration mounting devices are mounted on a supporting surface, for example the body of a car, providing a clearance between the supporting surface and a movable element of the anti-vibration mounting device, for example a fastening armature of a
component, for example an armature for fastening the upper part of a shock absorber. Such a clearance permits the reduction of low-amplitude noise and vibrations. However, the manufacturing tolerances of such supports are of the order of 1.0 mm, so that the clearance cannot be provided smaller than 1.0 mm. A clearance as large as this entails unpleasant occurrences especially when excessively large vibration and movement amplitudes are permitted, which, for example, harms the road handling of the car when the anti-vibration mounting device is used for the fitting of a strut.

### PRESENTATION OF THE INVENTION

One aspect of the present invention concerns an anti-vibration mounting device, comprising a decoupler, according to the preamble of claim 1. Examples of such anti-vibration mounting devices are known from DE 43 26 197 A1 and from FR 2 546 111 A1.

According to the invention, the decoupler extends in an axial direction and comprises a first armature and a second armature interconnected by means of at least one first elastomeric body in which at least one clearance in the axial direction is provided between the first armature and the second armature.

It is understood that a decoupler permits decoupling, at least over a range of predetermined frequencies and/or amplitudes of vibrations/movements, of the first armature and the second armature. In other words, the first armature and the second armature are decoupled for the vibrations/movements the amplitude of which is lower than the clearance(s).

The first armature and the second armature are connected to each other by means of a single or of several first elastomeric bodies.
It is understood that the first elastomeric body is configured to be deformed at least in the axial direction. Generally and unless otherwise specified, it is understood that an elastomeric body shows a rigidity that is significantly smaller than the rigidity of an armature.

The first armature can hence move along the whole axial course of the clearance (or of the clearances) in relation to the second armature (or vice versa). Consequently the relative movements imposed in the axial direction on the first and/or the second armature are, on the one hand, damped by the first elastomeric body and, on the other hand, decoupled in so far as the amplitude of these relative movements in the axial direction is lower than the clearance(s). Hence the axial movement of a armature smaller than the clearance does not bring about any movement of the other armature. The armatures are hence decoupled.

In addition, it is understood that each armature presents at least one surface opposite to a corresponding surface of the other armature. If no element is arranged between these opposite surfaces, it is understood that the axial distance between these two surfaces defines the clearance. If an element is interposed between these two surfaces, it is understood that the clearance is defined by the free axial distance separating said element and said surfaces. It is hence understood that there can be one or several clearances, if each armature presents one or more surfaces respectively opposite to a corresponding surface of the other armature.

In other words, the first armature and the second armature are assembled with clearance in the axial direction. Hence the first and second armatures cooperate with a clearance in the axial direction.

Such a decoupler for an anti-vibration mounting device makes it possible to become free of the manufacturing tolerances of the supporting surface on which the anti-vibration mounting device will be mounted. In other words it is possible to manufacture the decoupler with a desired precision, for example by adjusting the axial length of the clearance by at least one millimetre, for example between 0.05 mm and 0.5 mm. Such a high-precision decoupler can subsequently be mounted within an anti-vibration mounting device which will itself in turn be fastened to a supporting surface showing less strict manufacturing tolerances than those of the decoupler, thanks to which a form of mounting is obtained which shows low clearances and which is reproducible in large-scale manufacturing, irrespective of the tolerances of the supporting surface.

In certain embodiments, the clearance is a result of the thermal retraction in the axial direction of a second elastomeric body. Such clearances are easy to obtain in large-scale manufacturing, in a reliable and reproducible manner, and at low cost.

In certain embodiments the first armature comprises one seat extending perceptibly axially and at least one first protrusion extending from the seat in a direction perceptibly perpendicular to the axial direction.

Subsequently and unless otherwise specified, to be understood by 'perceptibly axially' or 'perceptibly axial direction' is that the element concerned is parallel to the axial direction, or is at an angle to the axial direction of less than 40° (the smallest angle being considered for measurement of the angles).

In the same way, subsequently and unless otherwise specified, to be understood by 'perceptibly perpendicular direction' or 'perceptibly perpendicularly', is that the element concerned is perpendicular to the reference direction/part or is at angle greater than 50° to the reference direction/part (the smallest angle being considered for measurement of the angles).

The first protrusion presents a surface delimiting, with a surface opposite to the second armature, an axial clearance. Such a structure of the first armature makes possible especially easy, reliable and reproducible manufacturing of the decoupler, in particular as regards the axial length of the clearance.

In certain embodiments, the first armature comprises at least one second protrusion extending from the seat in a direction perceptibly perpendicular to the axial direction, the first protrusion and the second protrusion being spaced in the axial direction, the second armature being arranged between the first protrusion and the second protrusion, a clearance being provided between the second armature and the first protrusion and/or between the second armature and the second protrusion.

It is hence understood that according to a variant there is a single clearance between the first protrusion and the second armature, that according to another variant there is a single clearance between the second protrusion and the second armature, and that according to yet another variant there is a first clearance between the first protrusion and the second armature and a second clearance between the second protrusion and the second armature. In the latter variant the axial length of the first clearance can be equal to the axial length of the second clearance or be different. The presence of two clearances of different axial lengths makes it possible in particular to adjust the permitted relative course of the two armatures in the two opposite directions in the axial direction, for example as a function of a pre-stressing applied at rest to one of the armatures. Hence during final assembly the two clearances can show the same axial length so as to authorise the same amplitudes of relative movements between the two armatures in the two opposite directions in the axial direction. Hence, generally, in certain embodiments the decoupler shows two clearances extending in the axial direction, with the clearances showing different axial lengths.

In certain embodiments, the first armature comprises a first face extending perceptibly axially while the second armature comprises a second face extending perceptibly axially and opposite the first face, the first elastomeric body being arranged wholly or partially between the first face and the second face and fastened at least partly to the first face and the second face.

Hence connecting two faces which are perceptibly parallel and which extend in the axial direction, it is ensured that the two armatures are free to move relatively in relation to each other along the whole course of the clearance, while being fastened to each other. Moreover, by arranging the elastomeric body in such a way, the latter can likewise damp the movements/vibrations perpendicular to the axial direction.

According to one variant, it is understood that the first face is formed by all or part of one face of the seat of the first armature.

In certain embodiments, at least one axial spacing between the first armature and the second armature is partially filled by a second elastomeric body, the clearance being provided between the second elastomeric body and the first armature and/or between the second elastomeric body and the second armature.

The second elastomeric body can be distinct from the first elastomeric body, or form one single body with the first elastomeric body

It is understood that the second elastomeric body is arranged in the axial spacing in such a way as to reduce its free axial length, but that it does not totally fill up the axial spacing in such a way as to form the clearance. Such a second elastomeric body makes it possible to finely adjust the axial length of the clearance. Hence, by partially filling the axial spacing, it is possible to adjust the clearance with great precision, for example to less than one millimetre, for example between 0.05 mm and 0.5 mm. The second elastomeric body likewise makes it possible to damp the relative movements of the first armature and the second armature. This makes it possible on the one hand to improve the acoustic/vibration comfort procured by the decoupler, and to prevent the phenomena of wear from contact between the first armature and the second armature. Of course, there can be one single elastomeric body or several second elastomeric bodies in one single axial spacing, in several axial spacings or in each of the axial spacings.

In certain embodiments, the second elastomeric body is fastened to one of the surfaces opposite the first armature and to the second armature defining the axial spacing. This makes it possible in particular to improve the endurance and reliability of the second elastomeric body, especially by at least partially preventing the phenomena of wear through contact.

In certain embodiments, an axial spacing is defined between a first surface of the first armature and a second surface of the second armature, the second surface being inclined in relation to the first surface.

It is understood that the first surface is opposite the second surface. Such a relative inclination between the two surfaces makes it possible to provide a greater volume than if the two faces were parallel, and hence a clearance presenting a greater axial length, particularly when this volume is partially filled by a second elastomeric body. This makes it possible to authorise greater movement/vibration amplitudes between the first and the second armature without, however, increasing the general space requirement of the decoupler.

According to one variant, the first surface is a surface of the first or of the second protrusion of the first armature.

One aspect of the invention thus concerns an anti-vibration mounting device, comprising a decoupler according to any one of the embodiments described in the present account, one mounting armature and at least one anti-vibration element arranged between the decoupler and the mounting armature.

The decoupler is connected to the mounting armature of the anti-vibration mounting device by means of an anti-vibration element. The anti-vibration element can be formed by any anti-vibration device known by a person skilled in the art, for example an elastomeric body. It is likewise understood that the anti-vibration element can be rigidly locked into the mounting armature of the anti-vibration mounting device and/or of one of the two armatures of the decoupler, or even of no armature (in this case, the anti-vibration element being simply positioned between the mounting armature of the anti-vibration mounting device and one of the two armatures of the decoupler). In certain embodiments the decoupler shows at least one third elastomeric body fastened to a armature between the first armature and the second armature in order to mount the decoupler on a mounting armature of an anti-vibration mounting device by means of said third elastomeric body. The third elastomeric body hence forms an anti-vibration element.

It is likewise understood that the decoupler, whether equipped with the anti-vibration element or not, can be mounted in a fixed or movable manner within the anti-vibration mounting device.

In certain embodiments, the rigidity in the axial direction of the anti-vibration element is greater than the rigidity in the axial direction of the first elastomeric body of the decoupler.

Such a configuration of the rigidities makes it possible to ensure that the decoupler, thanks to the first elastomeric body and to the clearance, mainly absorbs the low-amplitude vibrations/movements whilst the vibrations/movements with higher amplitudes are mainly absorbed by the anti-vibration element. Such overall behaviour of the anti-vibration mounting device is particularly effective from the anti-vibration point of view and as regards the vibration/acoustic comfort obtained.

In certain embodiments the anti-vibration mounting device forms a vehicle upper suspension support (also known by the English term 'topmount').
The anti-vibration device described in the present statement is particularly well suited to forming a vehicle upper suspension support, especially of a car or equivalent (i.e. road vehicle).

Another aspect of the invention concerns a manufacturing process, according to the preamble of claim 9, for the decoupler of the anti-vibration mounting device. An example of such a manufacturing process is known from DE 43 26 197 A1. According to the invention, the process for manufacturing a decoupler for the anti-vibration mounting device, said decoupler extending in an axial direction, comprising inter alia the steps of:
- supplying a first armature and a second armature, and
- connecting the first armature and the second armature with the help of a first elastomeric body while providing at least one clearance in the axial direction between the first armature and the second armature.

Such a manufacturing process makes it possible to adjust the axial length of the clearance with a desired precision, for example to less than one millimetre, for example between 0.05 mm and 0.5 mm.

According to one variant, the first armature and/or the second armature extend(s) in the axial direction.

In certain embodiments, in order to fasten the first armature to the second armature work proceeds in the following steps:
- applying a layer of bonding agent to a first face extending perceptibly axially of the first armature and on a second face extending perceptibly axially of the second armature,
- arranging the first and second faces opposite to each other, leaving a space between the first face and the second face, and in such a way that at least one clearance is arranged in the axial direction between the first armature and the second armature,
- filling the space at least partially with molten elastomer, and
- cooling said elastomer.

Of course, the stage of application of the layer of bonding agent can be carried out before or after the first and second faces have been arranged opposite each other.

The bonding agent is an agent that makes it possible for the elastomer to remain stuck to the face or surface onto which it is poured. In other words, the bonding agent is a bonding agent for elastomer, this type of agent being known in another connection. Hence, when the elastomer cools down it remains stuck to the first surface and to the second surface, thanks to which the first armature is connected to the second armature by means of a first elastomeric body. It is understood that in order to cool down the molten elastomer, it can simply be left to cool naturally at ambient temperature, or controlled cooling can be carried out.

According to the invention, the process for manufacturing a decoupler further comprises the step of partially filling at least one axial spacing between the first armature and the second armature with a second elastomeric body while at the same time arranging the clearance between the second elastomeric body and the first armature and/or between the second elastomeric body and the second armature.

For example, a strip of elastomeric material can be introduced into the axial spacing in order to partially fill it.

According to the invention, in order to partially fill the axial spacing with a second elastomeric body the work proceeds in the following steps:
- applying a layer of bonding agent to only one surface from among a first surface of the first armature and a second surface of the second armature,
- arranging the first armature and the second armature in such a way that the first surface of the first armature and the second surface define the axial spacing,
- filling the axial spacing with molten elastomer, and
- cooling said elastomer, thanks to which the clearance is formed by thermal retraction of said elastomer.

Of course, the stage of the application of the bonding agent can be carried out before or after the first and second armatures have been arranged in such a way as to define the clearance. In the case where the process likewise comprises the stage of the filling of the space between the first and the second armatures, the stage of the filling of the axial spacing can be carried out simultaneously or separately from this stage of the filling of said space.

By covering only one of the surfaces from among the first surface and the second surface, it is ensured that the elastomer only adheres to the surface covered with bonding agent whilst the elastomer does not adhere to the surface not covered with bonding agent. Hence, while cooling the elastomer retracts, remaining stuck to the face covered with bonding agents. It hence becomes unstuck from the surface not covered with bonding agent, thanks to which the clearance forms. Such retraction makes it possible to form, in a reliable and reproducible manner on a large scale, a clearance of less than one millimetre, for example between 0.05 mm and 0.5 mm. As above it is understood that in order to cool the molten elastomer it can simply be left to cool down naturally at ambient temperature, or controlled cooling can be carried out.

In certain embodiments, the layer of bonding agent is applied to the first surface.

In the case where the first surface is formed by the surface of a protrusion, such a configuration makes it possible to make use of the process easier, for example if the first face is contiguous to the first surface. This likewise makes it possible to improve the fastening of the elastomer, which improves the endurance and reliability of the decoupler.

In certain embodiments, work proceeds in the following stages:
- applying a layer of bonding agent to at least one area of a single armature from among the first armature and the second armature, and
- moulding of at least one elastomeric body (or third body) on said area.

The elastomeric body hence forms an anti-vibration element fastened to the decoupler. In the case where the process comprises the stage of filling of the space between the first and second armatures and/or the stage of filling of the axial spacing between the first surface and the second surface, the stage of moulding can be carried out simultaneously or separately from that or those stage(s) of filling.

Another aspect of the invention concerns a process for manufacturing an anti-vibration mounting device comprising the steps of:
- supplying a decoupler for the anti-vibration mounting device according to any one of the embodiments described in the present statement,
- supplying a mounting armature, and
- assembling the decoupler and the mounting armature by arranging an anti-vibration element between said decoupler and said mounting armature

Of course the decoupler can have been manufactured by a process described in the present account or by any other means.

The anti-vibration element can be made rigidly locked with the decoupler or with the mounting armature before the assembly stage. According to one variant, the anti-vibration element is simply arranged between the mounting armature and the decoupler, without being rigidly locked into any of these elements, for example during force fitting of the anti-vibration mounting device.

### BRIEF DESCRIPTION OF THE DRAWINGS

The invention and its advantages will be better understood by reading the detailed description presented below of different embodiments of the invention given as non-exhaustive examples. This description makes reference to the pages of annexed figures, in which:
- Fig. 1 represents a car equipped with an anti-vibration mounting device forming an upper suspension support,
- Fig. 2 represents a schematic view with an axial section of the anti-vibration mounting device illustrated in Fig. 1,
- Figures 3A to 3D represent different stages of manufacturing of the decoupler of the anti-vibrations mounting device illustrated in Fig. 2,
- Fig. 4 represents a variant of the decoupler of Fig. 3D, and
- Figures 5A to 5B represent different stages of manufacturing of the anti-vibration mounting device illustrated in Fig. 2.

### DETAILED DESCRIPTION OF EXAMPLES OF EMBODIMENTS

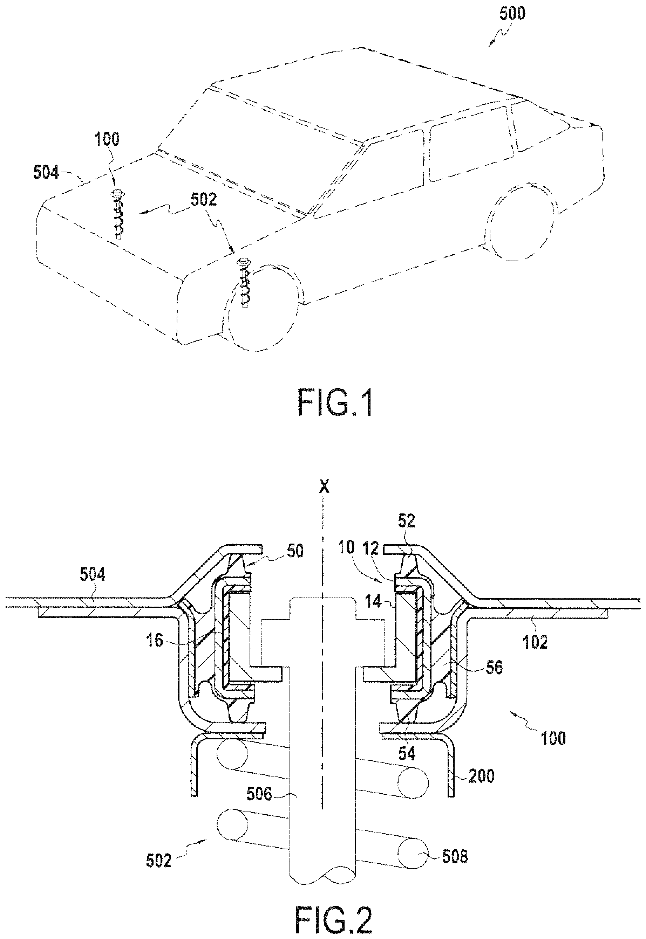

Fig. 1 represents a car 500, the struts of which 502 are fastened to the car body 504 by means of an anti-vibration mounting device 100 forming an upper suspension support, such a support likewise being called a 'topmount' in English. Fig. 2 represents in more detail the anti-vibration mounting device 100 within the car 500.

The anti-vibration mounting device 100 comprises a mounting armature 102 and a decoupler 10 to which an anti-vibration element 50 is fastened. The decoupler 10 comprises a first armature 12 and a second armature 14 interconnected by a first elastomeric body 16.

In this example, the anti-vibration mounting device 100, the decoupler 10 and the anti-vibration element 50 as well as each one of their respective elements show a cylindrical shape of axis X (axial direction X), and more particularly a rotationally symmetrical cylindrical shape. However, according to the variants, these shapes can be different, for example conical, cylindrical (i.e. cylindrical without rotational symmetry), or other. As a reminder, generally a cylindrical shape is a shape resulting from the combining of all the straight lines having the same direction and intersecting a given curve, this curve being able to be a circle, a square, an ellipse, in an oblong shape, in a cloverleaf shape, etc.

The mounting armature 102 serves the purpose of fastening the anti-vibration mounting device 100 to the body 504 of the car 500. The fastening to the body is achieved by known means, for example by bolting or welding, not illustrated.

The second armature 14 serves the purpose of the fastening of the strut 502, for example by bolting of the distal extremity of the piston rod of a shock-absorber 506. Of course, other elements of the strut 502, such as here, for example, a helical spring 508, can cooperate with the anti-vibration mounting device 100, in the present example by means of a collar 200 which can be fastened, or not, to the mounting armature 102 by means known in another connection, such as by welding. The axial direction X of the anti-vibration mounting device 100 coincides with the axial direction of the strut 502.

The first armature 12 forms in this example an intermediate armature which cooperates directly with the first elastomeric body 16 on the one hand, and with the anti-vibration element 50 on the other hand.

Of course, the terminology 'first armature' and 'second armature' is arbitrary. Hence, according to a variant, the first armature serves the purpose of fastening an element such as a strut while the second armature serves as an intermediate armature.

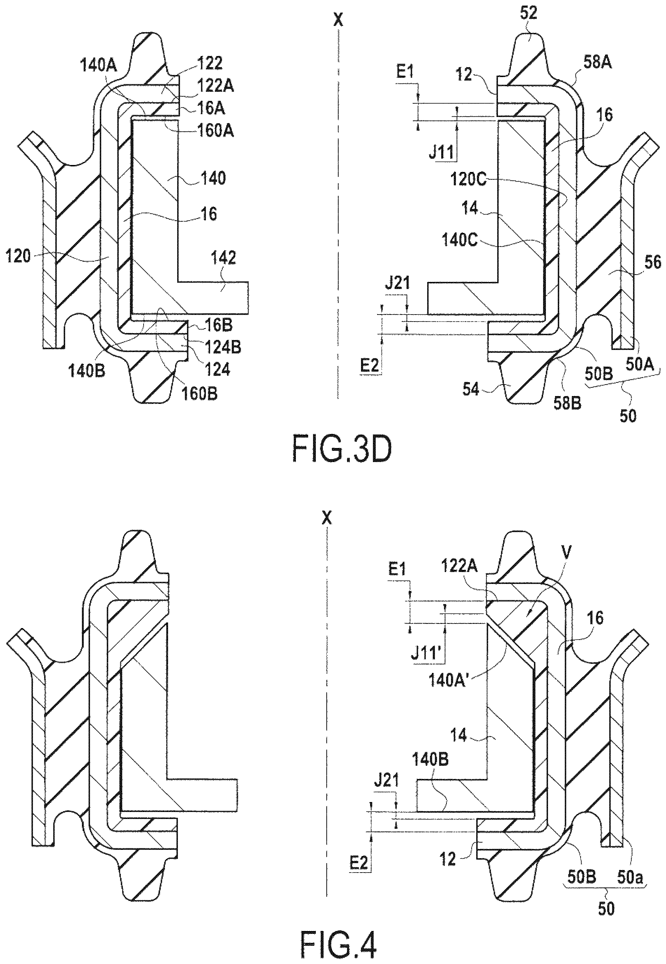

The decoupler 10 will now be described with reference to Fig. 3D.

The decoupler 10 extends in the axial direction X, and comprises the first armature 12 and the second armature 14, each of the armatures 12 and 14 extending in the axial direction X, these armatures 12 and 14 being connected by the first elastomeric body 16.

The first armature 12 shows a seat 120 extending in the axial direction X, a first protrusion 122 and a second protrusion 124 each extending from the seat 120 perpendicular to the axial direction X, in this example towards the interior of the seat 120. The first protrusion 122 is spaced in the axial direction of the second protrusion 124 (i.e. the protrusions 122 and 124 are axially distant).

The second armature 14 presents a skirt 140 extending in the axial direction X, and an extension 142 extending perpendicular to the axial direction X, in this example towards the interior of the skirt 140, this extension 142 forming an anchor point for fastening an element such as a shock-absorber.

The second armature 14 is arranged concentrically to the first armature 12, between the first and second protrusions 122 and 124. In this example the skirt 140 is arranged between the first and second protrusions 122 and 124.

Two second elastomeric bodies 16A and 16B are arranged in the axial spacings E1 and E2 respectively, separating the first armature 12 and the second armature 14, and more particularly in this example separating the surfaces 122A and 124B of the first and second protrusions 122 and 124 respectively opposite the surfaces of axial extremities 140A and 140B of the skirt 140, and more generally of the second armature 14. The surfaces 122A and 124B form first surfaces of the first armature 12 whilst the surfaces 140A and 140B form second surfaces of the second armature 14. Hence the second armature 14 is sandwiched by the first armature 12, and by the two second elastomeric bodies 16A and 16B, the latter being arranged between the first and the second armatures 12 and 14.

According to a variant not illustrated, there is no second elastomeric body so that the axial spacings E1 and E2 define a first clearance and a second clearance respectively (in other words the clearances extend along the complete axial extent of the axial spacings E1 and E2).

In the present example, it is considered that the axial spacings E1 and E2 are partially filled by the second elastomeric bodies 16A and 16B respectively. A first clearance J11 is hence provided between the second elastomeric body 16A, and more particularly the surface 160A of the body 16A, and the surface 140A of the skirt 140 while a second clearance J21 is provided between the second elastomeric body 16B, and more particularly the surface 160B of the body 16B, and the surface 140B of the skirt 140. It will be noted that the surfaces 140A, 140B, 122A, 124A, 160A and 160B extend perpendicular to the axial direction.

The interior axial face 120C of the seat 120 of the first armature 12 forms a first face extending axially from the first armature while the exterior face 140C of the skirt 140 of the second armature 14 forms a second face extending axially from the second armature 14, these two faces 120C and 140C being arranged opposite each other. The first elastomeric body 16 is arranged between these faces 120C and 140C, and it is fastened to each of these faces 120C and 140C.

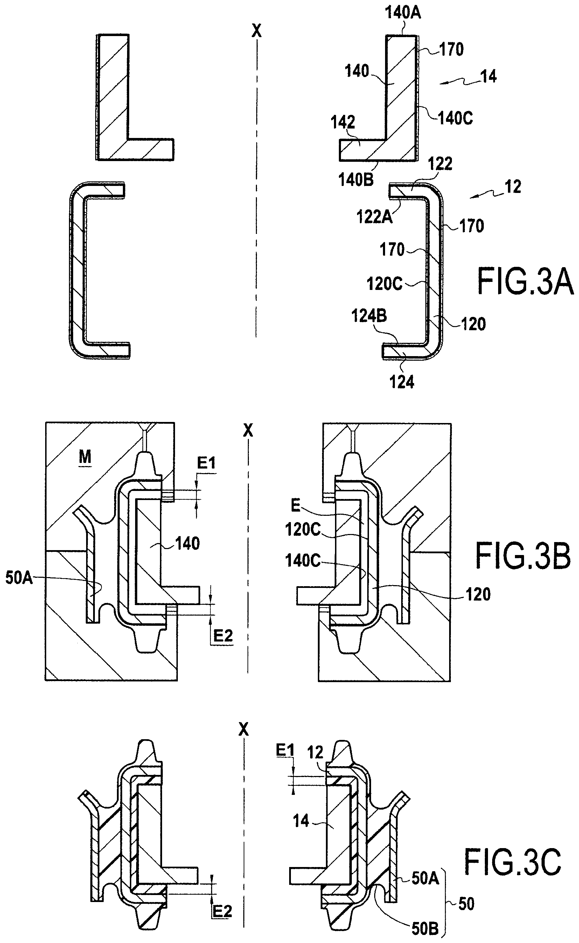

Generally it is understood that the first elastomeric body 16 fills at least partially the space E (cf. Fig. 3B) separating the first face 120C and the second face 140C, so that there is no clearance between the first armature 12 and the second armature 14 in a direction perpendicular to the axial direction X. In other words, it can be considered that the first elastomeric body 16 fills the clearance or space E extending in a direction perpendicular to the axial direction X between the first armature 12 and the second armature 14.

In the present example, it will be noted that the first elastomeric body 16 and the two second bodies 16A and 16B form one single body. This makes it possible in particular to make the manufacturing process described below easier.

Thanks to the clearances J11 and J21, relative movements in the axial direction X are permitted between the first armature 12 and the second armature 14. In this example the two second bodies 16A and 16B show great axial rigidity by comparison with the axial rigidity of the first elastomeric body 16. It will be noted, however, that in this example, the first body 16 and the second bodies 16A and 16B are manufactured from the same material, and that hence Young's modulus (or the modulus of elasticity in tension/flexure) of each of these first and second bodies is the same. Hence it can be considered that the relative axial courses between the first armature 12 and the second armature 14 in the two opposite axial directions are limited to the amplitude of the clearances J11 and J21 respectively. Similarly, the rigidity of the first elastomeric body 16 in the direction perpendicular to the axial direction X is great in comparison with the rigidity of this same first elastomeric body 16 in the axial direction X. Hence it can be considered that there is no relative movement between the first and second armatures 12 and 14 in the direction perpendicular to the axial direction X.

The first armature 12 likewise carries on its exterior surface a third elastomeric body 50 forming the anti-vibration element. In this example, the elastomeric body comprises a sleeve 50A and an elastomeric main part 50B. Of course, according to a variant, the elastomeric body does not comprise such a sleeve.

In this example, the third elastomeric body 50 presents three damping portions 52, 54 and 56, the damping portions 52 and 54 each forming a protuberance. The portions 52 and 54 extend axially from the first protrusion 122 and from the second protrusion 124, respectively, in opposite directions towards the exterior of the decoupler 10. The portion 56 extends in a direction perpendicular to the axial direction X from the seat 120 towards the outside. The sleeve 50A is fastened to this portion 56. The damping portions 52, 54 and 56 are interconnected by intermediate portions 58A and 58B, the set of these portions 52, 54, 56, 58A and 58B forming one single body, namely the elastomeric main part 50B of the third elastomeric body 50. Of course, according to one variant the damping portions can form separate bodies.

As illustrated in Fig. 2, the portions 54 and 56 cooperate as a support with the mounting armature 102 whilst the portion 52 cooperates as a support with a supporting surface, in this example the car body 504. In this example, the portion 56 cooperates with the mounting armature 102 by means of the sleeve 50A.

Hence, the portions 52 and 54 make it possible to damp axial movements/vibrations whilst the portion 56 makes it possible to damp movements/vibrations perpendicular to the axial direction X.

The rigidity in the axial direction X of the portions 52, 54 and 56 of the third elastomeric body 50 (or, generally, of the anti-vibration element) is greater than the rigidity in the axial direction X of the first elastomeric body 16. Hence, it is ascertained that there is certainly a relative movement between the first and the second armature 12 and 14, hence carrying out a decoupling process and a first absorption of the movements/vibrations of an amplitude lower than the axial length of the clearances J11 and J21 before this absorption is carried out by damping via the third elastomeric body 50, in this example by the portions 52, 54 et 56 when the movements/vibrations are of an amplitude higher or equal to the axial length of the clearances J11 and J21.

The rigidity in the axial direction X of the second elastomeric bodies 16A and 16B is great compared with the rigidity in the axial direction X of the portions 52, 54 and 56 (and generally of the third elastomeric body/anti-vibration element). This makes it possible to fully control the damping in the axial direction X for the movements/vibrations of an amplitude higher than the clearances J11 and J21 via the rigidity of the third elastomeric body 50, by gaining freedom from the rigidity of the second elastomeric bodies.

As a matter of fact, in this case, for the movements/vibrations in the axial direction X of an amplitude lower than the clearances J11 and J21, the rigidity of the anti-vibration mounting device 100 is equal to the rigidity in the axial direction X of the combination of the first elastomeric body 16 and of the third elastomeric body 50 (or, more generally, of the anti-vibration element), whilst for the movements/vibrations in the axial direction X of an amplitude higher than the clearances J11 and J21, the rigidity of the anti-vibration mounting device 100 is equal to the rigidity in the axial direction of the third elastomeric body 50 (or, more generally, of the anti-vibration element).

It is hence understood that the rigidity of the anti-vibration mounting device 100, in the axial direction X, thanks to the clearances, is smaller for movement/vibration amplitudes lower than the clearances than for movement/vibration amplitudes higher or equal to the clearances. In the case of mounting for a strut, this makes it possible in particular to easily filter the noises and vibrations while ensuring the support necessary for satisfactory road holding.

The manufacturing process for the decoupler will now be described with reference to Figures 3A to 3D.

In order to manufacture a decoupler 10 a first armature 12 and a second armature 14 are supplied. As illustrated in Fig. 3A, then a layer of bonding agent 170 (for elastomer) is applied to the first face 120C and to the first surfaces 122A and 124B of the first armature 12 as well as to the portions of the first armature 12 carrying the third elastomeric body 50, namely in this example, the exterior surface of the first armature 12

Of course, according to a variant, no bonding agent is applied to the portion in contact with the anti-vibration element formed in this example by the third elastomeric body. Likewise a layer of bonding agent 170 for elastomer is applied to the second face 140C of the second armature 14. It will be noted that in this example no bonding agent is applied to the faces 140A and 140B.

Then, as illustrated in Fig. 3B, the second armature 14 is introduced into the first armature 12. The first face 120C is arranged opposite the second face 140C while leaving a space E between these first and second faces 120C and 140C and so as to provide an axial spacing E1 and axial spacing E2 extending in the axial direction X between the first armature 12 and the second armature 14, in order to form at least one clearance in the axial direction X between the first armature 12 and the second armature 14. Hence, according to one variant, the clearance extends along the whole axial length of the axial spacing whilst, according to another variant, an element such as a second elastomeric body is introduced into the axial spacing, the clearance then being provided between said second elastomeric body and the first or second armature.

The set of the two armatures 12 and 14 is arranged in a mould M. It will be noted that the sleeve 50A is likewise arranged in the mould M, this sleeve likewise being coated, as a preliminary, with bonding agent for elastomer. Of course, the first and the second armatures 12 and 14 can be inter-arranged by placing them in the mould M, or they can first be arranged and then placed in the mould M.

First the space E and the axial spacings E1 and E2 are filled with the molten elastomer by injection. Likewise the elastomeric main part 50B of the third elastomeric body 50 is moulded with the molten elastomer on the first armature 12. The part obtained after injection is illustrated in Fig. 3C. It will be noted that in this Fig. 3C the elastomer is still hot, the axial spacings E1 and E2 being totally filled.

During cooling the elastomer retracts and becomes unstuck from the surfaces which are not covered in bonding agent for elastomer, namely in this example the surfaces 140A and 140B. This retraction during the cooling of the elastomer creates the clearances J11 and J21, as is illustrated in Fig. 3D. It will be noted that the retraction of the elastomer is foreseeable as a function of the thermal coefficient of retraction of said elastomer, of the thickness of the elastomer brought into play, and of the temperature variation between the injection temperature and the ambient temperature. Hence it is possible to adjust in a reliable and reproducible manner in large-scale manufacturing (production in large numbers) the retraction of the elastomer and hence the resultant clearances.

According to a variant illustrated in Fig. 4, the second armature 14 presents a second surface 140A' which is inclined in relation to the first surface 122A of the first armature 12. In this example the inclination of the first 140A' is approximately 45°. This creates a larger volume V between the first armature 12 and the second armature 14, in this example between the first protrusion 122 and the skirt 140, than in the examples in Figures 3A to 3D. Hence, in order to fill the axial spacing E1, a larger volume of elastomer is required. During cooling the retraction of this greater volume of elastomer is hence greater, which produces a clearance J11' larger than the clearance J11. In this example the clearance or lower clearance J21 is smaller than the clearance or higher clearance J11'.

Generally it will be noted that the clearances J11, J11' and J21 are created by applying bonding agent 170 only to the second face 140C and not the surfaces of axial extremities 140A, 140A' and 140B of the second armature 14.

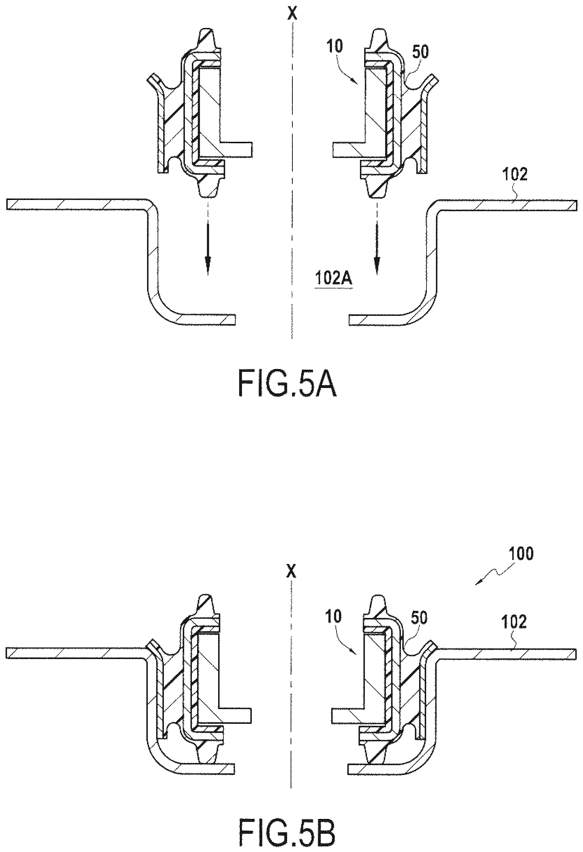

The manufacturing process for the anti-vibration mounting device will now be described with reference to Figures 5A and 5B. To manufacture an anti-vibration mounting device 100 a decoupler manufactured according to the process described above or not, and a mounting armature 102 are supplied. Then the decoupler 10 and the mounting armature 102 are joined together by means of the anti-vibration element 50, in this example the third elastomeric body 50 fastened to the decoupler 10. In this example, the mounting armature 102 shows a cavity 102A configured to receive the decoupler 10 at least partly, this cavity 102A extending in the axial direction X. Hence, in order to connect the mounting armature 102 and decoupler 10, the decoupler 10 is introduced into the cavity 102A in such a way that the axial direction of the decoupler 10 coincides with the axial direction of the cavity 102A, as is illustrated in Fig. 5A. In this example, the decoupler 10, onto which decoupler 10 the third elastomeric body 50 is fastened, is introduced with force into the cavity 102A.

Hence, as illustrated in Fig. 5B, the third elastomeric body 50 being fastened to the exterior part of the first armature of the decoupler 10, and more generally on the exterior part of the decoupler 10, when the anti-vibration mounting device 100 is assembled, the third elastomeric body 50 is arranged between the mounting armature 102 and the decoupler 10.

Generally, in the embodiments described above, the clearance(s) can be reproduced in a reliable and reproducible manner within the scope of large-scale manufacturing (large number of units produced) of anti-vibration mounting decoupler/device, and this irrespective of the assembly processes used.

Although the present invention has been described with reference to examples of specific embodiments, it is evident that modifications and changes can be made to these examples without departing from the scope of the invention such as is defined by the claims.

## Claims

1. Anti-vibration mounting device (100), comprising a decoupler (10), a mounting armature (102) and at least one anti-vibration element (50) arranged between the decoupler (10) and the mounting armature (102) **characterised in that** the decoupler extends in an axial direction (X) and comprises a first armature (12) and a second armature (14) interconnected by at least one first elastomeric body (16), wherein at least one clearance (J11, J11', J21) in the axial direction (X) is arranged between the first armature (12) and the second armature (14).

2. Anti-vibration mounting device (100) according to claim 1, in which the clearance (J11, J11', J21) results from the thermal retraction in the axial direction (X) of a second elastomeric body (16A, 16B).

3. Anti-vibration mounting device (100) according to the claim 1 or 2, in which the first armature (12) comprises a seat (120) extending perceptibly axially and at least one first and one second protrusion (122, 124) each extending from the seat (120) in a direction perceptibly perpendicular to the axial direction (X), the first and the second protrusions (122, 124) being spaced in the axial direction (X), the second armature (14) being arranged between the first protrusion (122) and the second protrusion (124), the clearance (J11, J11', J21) being arranged between the second armature (14) and the first protrusion (122) and/or between the second armature (14) and the second protrusion (124).

4. Anti-vibration mounting device (100) according to any one of the claims 1 to 3, in which the first armature (12) comprises a first face (120C) extending perceptibly axially whilst the second armature (14) comprises a second face (140C) extending perceptibly axially and opposite to the first face (120C), the first elastomeric body (16) being arranged wholly or partially between the first face (120C) and the second face (140C) and fastened at least partially to the first face (120C) and to the second face (140C).

5. Anti-vibration mounting device (100) according to any one of the claims 1 to 4, in which at least one axial spacing (E1, E2) between the first and the second armature (12, 14) is partially filled by a second elastomeric body (16A, 16B), the clearance (J11, J11', J21) being arranged between the second elastomeric body (16A, 16B) and the first armature (12) and/or between the second elastomeric body (16A, 16B) and the second armature (14).

6. Anti-vibration mounting device (100) according to any one of the claims 1 to 5, in which an axial spacing (E1, E2) is defined between a first surface (122A) of the first armature (12) and a second surface (140A') of the second armature (14), the second surface (140A') being inclined in relation to the first surface (122A).

7. Anti-vibration mounting device (100) according to any one of the claims 1 to 6, in which the rigidity in the axial direction (X) of the anti-vibration element (50) is greater than the rigidity in the axial direction (X) of the first elastomeric body (16) of the decoupler (10).

8. Anti-vibration mounting device (100) according to any one of the claims 1 to 7, forming an upper suspension support for vehicles.

9. Process for manufacturing a decoupler (10) for an anti-vibration mounting device (100) according to any one of the claims 1 to 8, said decoupler (10) extending in an axial direction (X), said process being **characterised by** the steps of:
- supplying a first armature (12) and a second armature (14),
- connecting the first armature (12) and the second armature (14) together with the help of a first elastomeric body (16) while at the same time arranging at least one clearance (J11, J11', J21) in the axial direction (X) between the first armature (12) and the second armature (14) comprising the step of partially filling at least one axial spacing (E1, E2) between the first armature (12) and the second armature (14) with a second elastomeric body (16A, 16B) while at the same time arranging the clearance (J11, J11', J21) between the second elastomeric body (16A, 16B) and the first armature (12) and/or between the second elastomeric body (16A, 16B) and the second armature (14), in which, in order to partially fill the axial spacing (E1, E2) with a second elastomeric body (16A, 16B) work proceeds in the following steps:
- applying a layer of bonding agent (170) to only one face from among a first surface (122A, 124B) of the first armature (12) and a second face (140A, 140B) of the second armature (14)
- arranging the first armature (12) and the second armature (14) in such a way that the first surface (122A, 122B) of the first armature (12) and the second face (140A, 140B) define the axial spacing (E1, E2),
- filling the axial spacing (E1, E2) with molten elastomer, and
- cooling said elastomer, thanks to which the clearance (J11, J11', J21) is formed by thermal retraction of said elastomer.

10. Process for manufacturing a decoupler (10) according to claim 9, in which in order to fasten the first armature (12) to the second armature (14) work proceeds in the following steps:
- applying a layer of bonding agent (170) to a first face (120C) extending perceptibly axially from the first armature (12) and on a second face (140C) extending perceptibly axially of the second armature (14),
- arranging the first and second faces (120C, 140C) opposite to each other, leaving a space (E) between the first face (120C) and the second face (140C), and in such a way that at least one clearance (J11, J11', J21) is arranged in the axial direction (X) between the first armature (12) and the second armature (14),
- filling the space (E) at least partially with molten elastomer, and
- cooling said elastomer.

11. Process for manufacturing a decoupler (10) according to any one of the claims 9 or 10, in which the layer of bonding agent (170) is applied to the first surface (122A, 122B).

12. Process for manufacturing an anti-vibration mounting device (100) comprising the steps of:
- supplying a decoupler (10) for an anti-vibration mounting device according to any one of the claims 1 to 6,
- supplying a mounting armature (102), and
- assembling the decoupler (10) and the mounting armature (102) by arranging an anti-vibration element (50) between said decoupler (10) and said mounting armature (102).

## Patentansprüche

1. Schwingungsdämpfende Lagervorrichtung (100), umfassend einen Entkoppler (10), einen Befestigungsanker (102) und mindestens ein zwischen dem Entkoppler (10) und dem Befestigungsanker (102) angeordnetes Schwingungsdämpfungselement (50), **dadurch gekennzeichnet, dass** der Entkoppler sich in einer axialen Richtung (X) erstreckt und einen ersten Anker (12) und einen zweiten Anker (14) umfasst, die durch mindestens einen ersten Elastomerkörper (16) verbunden sind, wobei mindestens ein Abstand (J11, J11', J21) in axialer Richtung (X) zwischen dem ersten Anker (12) und dem zweiten Anker (14) vorgesehen ist.

2. Schwingungsdämpfende Lagervorrichtung (100) nach Anspruch 1, bei der der Abstand (J11, J11', J21) aus der thermisches Schrumpfen in axialer Richtung (X) eines zweiten Elastomerkörpers (16A, 168) resultiert.

3. Schwingungsdämpfende Lagervorrichtung (100) nach Anspruch 1 oder 2, bei der der erste Anker (12) einen Sitz (120) aufweist, der sich deutlich axial erstreckt, und mindestens einen ersten und einen zweiten Vorsprung (122, 124), die sich von dem Sitz (120) jeweils deutlich in einer Richtung senkrecht zur axialen Richtung (X) erstrecken, wobei der erste und der zweite Vorsprung (122, 124) in axialer Richtung (X) beabstandet sind, wobei der zweite Anker (14) zwischen dem ersten Vorsprung (122) und dem zweiten Vorsprung (124) angeordnet ist, wobei der Abstand (J11, J11', J21) zwischen dem zweiten Anker (14) und dem ersten Vorsprung (122) und/oder zwischen dem zweiten Anker (14) und dem zweiten Vorsprung (124) vorgesehen ist.

4. Schwingungsdämpfende Lagervorrichtung (100) nach einem der Ansprüche 1 bis 3, wobei der erste Anker (12) eine erste Fläche (120C) aufweist, die sich deutlich axial erstreckt, während der zweite Anker (14) eine zweite Fläche (140C) aufweist, die sich deutlich axial und gegenüber der ersten Fläche (120C) erstreckt, wobei der erste Elastomerkörper (16) ganz oder teilweise zwischen der ersten Fläche (120C) und der zweiten Fläche (140C) angeordnet ist und zumindest teilweise an der ersten Fläche (120C) und der zweiten Fläche (140C) befestigt ist.

5. Schwingungsdämpfende Lagervorrichtung (100) nach einem der Ansprüche 1 bis 4, bei der mindestens ein axialer Abstand (E1, E2) zwischen dem ersten und dem zweiten Anker (12, 14) teilweise durch einen zweiten Elastomerkörper (16A, 16B) ausgefüllt ist, wobei der Abstand (J11, J 11', J21) zwischen dem zweiten Elastomerkörper (16A, 168) und dem ersten Anker (12) und/oder zwischen dem zweiten Elastomerkörper (16A, 16B) und dem zweiten Anker (14) vorgesehen ist.

6. Schwingungsdämpfende Lagervorrichtung (100) nach einem der Ansprüche 1 bis 5, bei der ein axialer Abstand (E1, E2) zwischen einer ersten Fläche (122A) des ersten Ankers (12) und einer zweiten Fläche (140A') des zweiten Ankers (14) definiert ist, wobei die zweite Fläche (140A') gegenüber der ersten Fläche (122A) geneigt ist.

7. Schwingungsdämpfende Lagervorrichtung (100) nach einem der Ansprüche 1 bis 6, bei der die Steifigkeit in axialer Richtung (X) des Schwingungsdämpfers (50) größer ist als die Steifigkeit in axialer Richtung (X) des ersten Elastomerkörpers (16) des Entkopplers (10).

8. Schwingungsdämpfende Lagervorrichtung (100) nach einem der Ansprüche 1 bis 7, die eine obere Aufhängungsabstützung für Fahrzeuge bildet.

9. Verfahren zur Herstellung eines Entkopplers (10) für eine schwingungsdämpfende Lagervorrichtung (100) nach einem der Ansprüche 1 bis 8, bei dem sich der Entkoppler (10) in einer axialen Richtung (X) erstreckt, wobei das Verfahren durch die folgenden Schritte gekennzeichnet ist:
- Bereitstellen eines ersten Ankers (12) und eines zweiten Ankers (14),
- Verbinden des ersten Ankers (12) und des zweiten Ankers (14) mit Hilfe eines ersten Elastomerkörpers (16) bei gleichzeitiger Anordnung mindestens eines Abstandes (J11, J11', J21) in Axialrichtung (X) zwischen dem ersten Anker (12) und dem zweiten Anker (14), umfassend den Schritt des partiellen Füllens von mindestens einem Achsabstand (E1, E2) zwischen dem ersten Anker (12) und dem zweiten Anker (14) mit einem zweiten Elastomerkörper (16A, 16B) bei gleichzeitiger Anordnung des Abstands (J11, J11', J21) zwischen dem zweiten Elastomerkörper (16A, 16B) und dem ersten Anker (12) und/oder zwischen dem zweiten Elastomerkörper (16A, 16B) und dem zweiten Anker (14), wobei zum partiellen Füllen des Achsabstands (E1, E2) mit einem zweiten Elastomerkörper (16A, 16B) die Bearbeitung in den folgenden Schritten abläuft:
Aufbringen einer Bindemittelschicht (170) auf nur eine Fläche von einer ersten Fläche (122A, 124B) des ersten Ankers (12) und einer zweiten Fläche (140A, 140B) des zweiten Ankers (14);
- Anordnen des ersten Ankers (12) und des zweiten Ankers (14) derart, dass die erste Fläche (122A, 122B) des ersten Ankers (12) und die zweite Fläche (140A, 140B) den Achsabstand (E1, E2) definieren;
Füllen des Achsabstandes (E1, E2) mit Elastomerschmelze; und
- Abkühlen des Elastomers, wodurch der Abstand (J11, J11', J21) durch thermisches Schrumpfen des Elastomers gebildet wird.

10. Verfahren zur Herstellung eines Entkopplers (10) nach Anspruch 9, bei dem zur Befestigung des ersten Ankers (12) am zweiten Anker (14) die Bearbeitung in den folgenden Schritten abläuft:
- Aufbringen einer Bindemittelschicht (170) auf eine erste Fläche (120C), die sich von dem ersten Anker (12) aus deutlich axial erstreckt, und auf eine zweite Fläche (140C), die sich deutlich axial von dem zweiten Anker (14) erstreckt;
- Anordnen der ersten und zweiten Fläche (120C, 140C) einander gegenüberliegend, wobei zwischen der ersten Fläche (120C) und der zweiten Fläche (140C) ein Abstand (E) verbleibt, und derart, dass mindestens ein Abstand (J11, J11', J21) in axialer Richtung (X) zwischen dem ersten Anker (12) und dem zweiten Anker (14) vorgesehen ist;
- Füllen des Abstandes (E) mit Elastomerschmelze; und
- Abkühlen des Elastomers.

11. Verfahren zur Herstellung eines Entkopplers (10) nach einem der Ansprüche 9 oder 10, bei dem die Bindemittelschicht (170) auf die erste Fläche (122A, 122B) aufgebracht wird.

12. Verfahren zur Herstellung einer schwingungsdämpfenden Lagervorrichtung (100) mit den folgenden Schritten:
- Bereitstellen eines Entkopplers (10) für eine schwingungsdämpfende Lagervorrichtung nach einem der Ansprüche 1 bis 6,
- Bereitstellen eines Lagerankers (102); und
- Zusammenbau des Entkopplers (10) und des Lagerankers (102) durch Anordnen eines Anti-Vibrationselements (50) zwischen dem Entkoppler (10) und dem Lageranker (102).

## Revendications

1. Dispositif de montage antivibratoire (100), comprenant un découpleur (10), une armature de montage (102) et au moins un élément antivibratoire (50) disposé entre le découpleur (10) et l'armature de montage (102), **caractérisé en ce que** le découpleur (10) s'étend selon une direction axiale (X) et comprend une première armature (12) et une deuxième armature (14) reliées entre elles par au moins un premier corps en élastomère (16), au moins un jeu (J11, J11', J21) selon la direction axiale (X) étant ménagé entre la première armature (12) et la deuxième armature (14).

2. Dispositif de montage antivibratoire (100) selon la revendication 1, dans lequel le jeu (J11, J11', J21) résulte de la rétractation thermique selon la direction axiale (X) d'un deuxième corps en élastomère (16A, 16B).

3. Dispositif de montage antivibratoire (100) selon la revendication 1 ou 2, dans lequel la première armature (12) comprend une embase (120) s'étendant sensiblement axialement et au moins une première et une deuxième saillies (122, 124) s'étendant chacune depuis l'embase (120) dans une direction sensiblement perpendiculaire à la direction axiale (X), les première et deuxième saillies (122, 124) étant espacées selon la direction axiale (X), la deuxième armature (14) étant disposée entre la première saillie (122) et la deuxième saillie (124), le jeu (J11, J11', J21) étant ménagé entre la deuxième armature (14) et la première saillie (122) et/ou entre la deuxième armature (14) et la deuxième saillie (124).

4. Dispositif de montage antivibratoire (100) selon l'une quelconque des revendications 1 à 3, dans lequel la première armature (12) comprend une première face (120C) s'étendant sensiblement axialement tandis que la deuxième armature (14) comprend une deuxième face (140C) s'étendant sensiblement axialement et en vis-à-vis de la première face (120C), le premier corps en élastomère (16) étant disposé en tout ou partie entre la première face (120C) et la deuxième face (140C) et fixé au moins en partie à la première face (120C) et à la deuxième face (140C).

5. Dispositif de montage antivibratoire (100) selon l'une quelconque des revendications 1 à 4, dans lequel au moins un espacement axial (E1, E2) entre la première et la deuxième armature (12, 14) est partiellement comblé par un deuxième corps en élastomère (16A, 16B), le jeu (J11, J11', J21) étant ménagé entre le deuxième corps en élastomère (16A, 16B) et la première armature (12) et/ou entre le deuxième corps en élastomère (16A, 16B) et la deuxième armature (14).

6. Dispositif de montage antivibratoire (100) selon l'une quelconque des revendications 1 à 5, dans lequel un espacement axial (E1, E2) est défini entre une première surface (122A) de la première armature (12) et une deuxième surface (140A') de la deuxième armature (14), la deuxième surface (140A') étant inclinée par rapport à la première surface (122A).

7. Dispositif de montage antivibratoire (100) selon l'une quelconque des revendications 1 à 6, dans lequel la rigidité selon la direction axiale (X) de l'élément antivibratoire (50) est supérieure à la rigidité selon la direction axiale (X) du premier corps en élastomère (16) du découpleur (10).

8. Dispositif de montage antivibratoire (100) selon l'une quelconque des revendications 1 à 7, formant un appui supérieur de suspension de véhicule.

9. Procédé de fabrication d'un découpleur (10) pour dispositif de montage antivibratoire (100) selon l'une quelconque des revendications 1 à 8, ledit découpleur (10) s'étendant selon une direction axiale (X), ledit procédé étant **caractérisé en ce qu'**il comprend es étapes de :
- fournir une première armature (12) et une deuxième armature (14), et
- relier la première armature (12) et la deuxième armature (14) à l'aide d'un premier corps en élastomère (16) tout en ménageant au moins un jeu (J11, J11', J21) selon la direction axiale (X) entre la première armature (12) et la deuxième armature (14), comprenant l'étape de combler partiellement au moins un espacement axial (E1, E2) entre la première armature (12) et la deuxième armature (14) avec un deuxième corps en élastomère (16A, 16B) tout en ménageant le jeu (J11, J11', J21) entre le deuxième corps en élastomère (16A, 16B) et la première armature (12) et/ou entre le deuxième corps en élastomère (16A, 16B) et la deuxième armature (14), dans lequel, pour combler partiellement l'espacement axial (E1, E2) avec un deuxième corps en élastomère (16A, 16B) on procède aux étapes de :
- déposer une couche d'agent adhésif (170) sur uniquement une surface parmi une première surface (122A, 124B) de la première armature (12) et une deuxième surface (140A, 140B) de la deuxième armature (14)
- disposer la première armature (12) et la deuxième armature (14) de sorte que la première surface (122A, 122B) et la deuxième surface (140A, 140B) définissent l'espacement axial (E1, E2),
- remplir l'espacement axial (E1, E2) avec de l'élastomère fondu, et
- refroidir ledit élastomère, grâce à quoi le jeu (J11, J11', J21) est formé par rétractation thermique dudit élastomère..

10. Procédé de fabrication d'un découpleur (10) selon la revendication 9, dans lequel pour fixer la première armature (12) à la deuxième armature (14) on procède aux étapes de :
- déposer une couche d'agent adhésif (170) sur une première face (120C) s'étendant sensiblement axialement de la première armature (12) et sur une deuxième face (140C) s'étendant sensiblement axialement de la deuxième armature (14),
- disposer les première et deuxième faces (120C, 140C) en vis-à-vis en laissant un espace (E) entre la première face (120C) et la deuxième face (140C), et de manière à ménager au moins un jeu (J11, J11', J21) selon la direction axiale (X) entre la première armature (12) et la deuxième armature (14),
- remplir au moins en partie l'espace (E) avec le l'élastomère fondu, et
- refroidir ledit élastomère.

11. Procédé de fabrication d'un découpleur (10) selon l'une quelconque des revendications 9 ou 10, dans lequel la couche d'agent adhésif (170) est disposée sur la première surface (122A, 122B).

12. Procédé de fabrication d'un dispositif de montage antivibratoire (100) comprenant les étapes de :
- fournir un découpleur (10) pour dispositif de montage antivibratoire selon l'une quelconque des revendications 1 à 6,
- fournir une armature de montage (102), et
- assembler le découpleur (10) et l'armature de montage (102) en disposant un élément antivibratoire (50) entre ledit découpleur (10) et ladite armature de montage (102).
